# EUROPÄISCHE PATENTANMELDUNG

(11) **EP 0 906 835 A2**
(43) Veröffentlichungstag der Anmeldung: **07.04.1999**
(21) Anmeldenummer: 98117623.3
(22) Anmeldetag: 17.09.1998
(51) Int. Cl.: B60B 27/02

(54) **Nabe für ein Fahrrad**

(30) Priorität: 02.10.1997 DE 19743661
(71) Anmelder: SRAM Deutschland GmbH, 97424 Schweinfurt (DE)
(72) Erfinder: Steuer, Werner, 97424 Schweinfurt (DE); Nürnberger, Günter, 97422 Schweinfurt (DE)

(57) **Zusammenfassung**

Nabe für ein Laufrad eines Fahrrades mit einer geteilten Nabenachse (8), wobei die Nabe auf einem größeren Teilstück der Nabenachse an einem der Ausfallenden befestigt ist, während das zweite Teilstück der Nabenachse als Achsverlängerung (13) dient und zur Befestigung in einem zweiten Ausfallende herangezogen werden kann, während ein Distanzteil (15) gegen einen Lagerträger der Nabe verspannt wird. Der Vorteil dieser Konstruktion liegt darin, daß bei Herausnahme der Achsverlängerung (13) auch das Distanzteil (15) entfernt werden kann, wodurch ein Spalt entsteht, durch den die Bereifung des Laufrades herausgezogen werden kann, ohne die Nabe und somit das Laufrad vom ersten Ausfallende zu lösen.

## Beschreibung

Die Erfindung betrifft eine Nabe in einem Laufrad für ein Fahrrad gemäß dem Oberbegriff des Anspruches 1.

Mit dem deutschen Gebrauchsmuster GM 82 26 103 ist eine Freilaufnabe für Fahrräder bekannt geworden, die eine teilbare Nabenachse mit getrennt gelagerten, zur Aufnahme der Kettenzahnkränze eingerichteten Antreiber aufweist, welcher mittels eines Klinkenfreilaufsystems mit den koaxialen Nabenhülsenkörper im Antriebssinne kuppelbar ist, wobei der Nabenkörper vom Antreiber axial ausgebildet und dabei an seinen Lagerflanschen mit einer Wälzlagerung jeweils ohne Stellkonus ausgerüstet ist womit ein völliges axiales Herausnehmen des Nabenachsteiles (Steckachse) aus dem Nabenhülsenkörper ermöglicht ist.

Um nach Herausnahme der als Steckachse ausgebildeten Nabenachse den Hülsenkörper entfernen zu können, muß eine Distanzhülse zwischen der Lagerung der Nabenhülse und dem Ausfallende entfernt werden, wodurch sich auf der gegenüberliegenden Seite des Nabenkörpers das Klinkenfreilaufsystem auseinanderziehen läßt, wodurch das Laufrad aus dem Verbund mit seinen Kettenzahnkränzen herausgenommen werden kann. Ziel der Einrichtung ist es, ohne Demontage der Kettenschaltung sowie der Kettenzahnkränze das Laufrad zur Reparatur herausnehmen zu können.

Im Gegensatz zu der vorbeschriebenen Herausnahme des kompletten Laufrades wird mit der vorliegenden Erfindung vorgeschlagen, lediglich die Bereifung des Laufrades zur Reparatur herauszunehmen und das Laufrad an einem der Ausfallenden zu belassen. Diese Maßnahme hat den Vorteil, daß der Laie den Radausbau vermeiden kann, wodurch er keine Montagefehler bei der Wiedermontage nach der Reifenreparatur macht.

Hieraus ergibt sich als Aufgabe der Erfindung, eine Nabe zu schaffen die in einen Rahmen eines Fahrrades zwischen zwei Ausfallenden einbaubar ist, wobei durch einfache Demontage eines Klemmelementes ein Distanzteil herausnehmbar ist, das eine Lücke zwischen der Nabe und einem Ausfallende entstehen läßt, durch welche die Bereifung des Laufrades herausgenommen werden kann.

Die Lösung der Aufgabe ist in den Ansprüchen beschrieben.

Eine Skizze zeigt die Möglichkeit der Demontage eines Distanzteils anhand einer beispielhaften Rücktrittgetriebenabe.

Die als Beispiel zur Demonstration der Auswechselbarkeit einer Bereifung eines Laufrades gewählte Nabe ist eine Getriebenabe mit Rücktrittbremse mit einer Nabenhülse 1, die über eine erste Lagerung 2 drehbar mit einem Antreiber 5 und über eine zweite Lagerung 3 mit einem zweiten Lagerträger 11 drehbar verbunden ist, wobei der Antreiber 5 über eine dritte Lagerung 4 mit einem ersten Lagerträger 10 drehbar verbunden ist. Sowohl der erste Lagerträger 10 wie der zweite Lagerträger 11 ist mit einer Achse 8 verbunden. Die Achse 8 ist mittels einer Achsmutter 9 mit einem ersten Ausfallende 6 verspannt, während das gegenüberliegende Ende der Achse 8 in einem hülsenähnlichen Fortsatz des zweiten Lagerträgers 11 mündet, mit dem sie axial fest verbindbar ist. Der zweite Lagerträger 11 weist ein konzentrisches Gewinde 14 auf, in das eine Achsverlängerung 13 eingedreht werden kann. Das Gewinde 14 ist im zweiten Lagerträger 11 derart angebracht, daß die Achsverlängerung 13 sich koaxial zur Achse 8 zur Bildung einer Nabenachse anordnen läßt, wobei sie im Falle der Montage in einem zweiten Ausfallende 7 des Rahmens 18 das Ausfallende 7 gegen den zweiten Lagerträger 11 verspannt werden kann, sofern ein Distanzteil 15 in den Schraubenverbund eingelegt wird. Das Distanzteil 15 hat axial eine Erstreckung von etwa 10 bis 20 mm, wodurch ein Abstand zwischen dem zweiten Ausfallende 7 und dem zweiten Lagerträger 11 nach der Montage aller Teile hergestellt wird. Durch die Montage der Achse 8 am ersten Ausfallende 6 mittels der Achsmutter 9 ist die komplette Nabe und somit das Laufrad bereits mit dem Rahmen 18 des Fahrrades verbunden, jedoch noch nicht betriebsbereit, da die Abstützung zum zweiten Ausfallende 7 über die Achsverlängerung 13 fehlt. Sofern das Distanzteil 15 noch nicht eingelegt ist, ergibt sich zwischen dem Ausfallende 7 und dem zweiten Lagerträger 11 eine Lücke, die durch eine Trennebene 17 entlang dem zweiten Lagerträger 11 und durch die der Nabe zugewandten Planfläche des zweiten Ausfallendes 7 beschrieben wird.

Sofern es sich um eine Rücktrittbremsnabe oder aber um eine Trommelbremsnabe handelt, weist der zweite Lagerträger 11 einen Momentenabstützhebel 12 auf, der mit dem Rahmen 18 verklemmt oder verschraubt ist. Will man also die Bereifung durch die vorbeschriebene Lücke an der Stelle des Distanzteils 15 führen, muß auch der Momentenabstützhebel 12 vom Rahmen 18 um mindestens den Betrag der Lücke wegbewegt werden. Aus diesem Grunde ist der zweite Lagerträger 11 mit der Achse 8 bedingt drehbar verbunden, wodurch der Momentenabstützhebel 12 gegenüber dem Rahmen 18 verdreht werden kann. Andere Lösungsmöglichkeiten sind denkbar: Der Momentenabstützhebel 12, kann als Einzelteil mit dem zweiten Lagerträger 11 gefügt sein; der Momentenabstützhebel 12 kann mit dem Distanzteil 15 einteilig verbunden und mit dem zweiten Lagerträger 11 gefügt sein; der Momentenabstützhebelhebel 12 kann klappbar ausgebildet sein; schließlich kann der Distanzteil 15 mit der Achsverlängerung 13 verbunden sein, wodurch sich Abwandlungen in der Ausbildung des Momentenabstützhebels 12 ergeben können.

Die Vorteile der Erfindung liegen darin, daß die Bereifung eines Laufrades abseits vom Fahrrad repariert werden kann, nachdem sie von diesem demontiert wurde, ohne das betreffende Laufrad auszubauen. Schwerpunktmäßig betrifft dies sowohl Hollandräder als auch Fahrräder mit Kettenschaltung. Bei Hollandrädern ist der Ausbau der Hinterradnabe besonders schwierig, da ein kompliziert montierter Kettenschutz mit ausgebaut werden muß. Hollandräder sind hauptsächlich mit Trommelbremsen ausgerüstet. Auch hier ist die oben genannte erfindungsgemäße Lösung äußert vorteilhaft. Es muß bei der Reifendemontage lediglich der Zug für die Bremsbetätigung getrennt d. h. ausgehängt werden. Bei Fahrrädern mit Kettenschaltung ist die Montage des hinteren Laufrades ebenfalls für den Laien mit Problemen behaftet, da das von Federn vorgespannte Leitwerk der Kettenschaltung die Kette nach dem Ausbau des Laufrades mit dem Kettenradsatz in häufig nicht zu durchschauender Weise verdreht. Gleichermaßen sind aber auch Vorderradnaben mit besonderen Einbauten davon betroffen, wie z. B. eine solche mit einem Fahrradgenerator, wo sich der Einbau der erfindungsgemäßen Einrichtung lohnt.

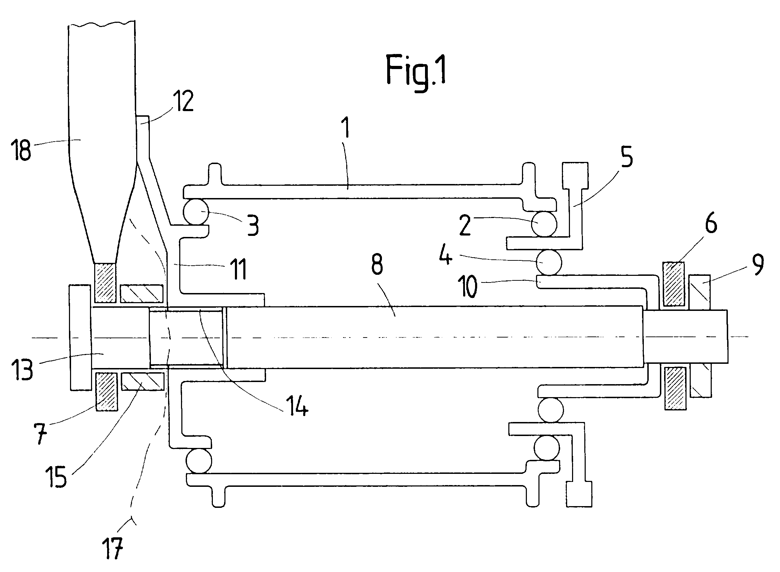

## Patentansprüche

1. Nabe in einem Laufrad für ein Fahrrad mit einer Nabenhülse (1), die auf einem ersten Lagerträger (10) und einem zweiten Lagerträger (11) drehbar auf einer Nabenachse gelagert und zwischen einem ersten Ausfallende (6) und einem zweiten Ausfallende (7) in einem Rahmen (18) angeordnet ist, wobei die Nabenachse teilbar ist und aus einer Achse (8) und einer Achsverlängerung (13) besteht,
dadurch gekennzeichnet,
daß das Laufrad mit der Nabe auf der Achse (8) gelagert ist, die mit einem Ausfallende (6) verbunden ist, wobei zwischen der Nabe und dem zweiten Ausfallende (7) eine Lücke entsteht, die groß genug ist, um eine auf dem Laufrad angebrachte Bereifung hindurch zu schieben.

2. Nabe nach Anspruch 1,
dadurch gekennzeichnet,
daß die Achse (8) mit der Achsverlängerung (13) vom ersten Ausfallende (6) bis zum zweiten Ausfallende (7) verlängerbar ist.

3. Nabe nach Anspruch 1 oder 2,
dadurch gekennzeichnet,
daß die Trennstelle zwischen der Achse (8) und der Achsverlängerung (13) innerhalb des zweiten Lagerträgers (11) liegt.

4. Nabe nach einem der Ansprüche 1 bis 3,
dadurch gekennzeichnet,
daß die Achsverlängerung (13) in der Nähe der Verbindungsstelle zwischen der Achse (8) und dem zweiten Lagerträger (11) befestigt werden kann.

5. Nabe nach einem der Ansprüche 1 bis 4,
dadurch gekennzeichnet,
daß innerhalb des zweiten Lagerträgers (11) ein Gewinde (14) angeordnet ist, in das die Achsverlängerung (13) einschraubbar ist.

6. Nabe nach einem der Ansprüche 1 bis 5,
dadurch gekennzeichnet,
daß der zweite Lagerträger (11) mit der Achse (8) axial fest verbunden ist.

7. Nabe nach einem der Ansprüche 1 bis 6,
dadurch gekennzeichnet,
daß mit der Achsverlängerung (13) ein herausnehmbares Distanzteil (15) von der Breite der Lücke zusammen mit dem zweiten Ausfallende (7) gegen den zweiten Lagerträger (11) spannbar ist.

8. Nabe nach einem der Ansprüche 1 bis 7,
dadurch gekennzeichnet,
daß das Distanzteil (15) mit der Achsverlängerung (13) verbindbar ist.

9. Nabe nach einem der Ansprüche 1 bis 8,
dadurch gekennzeichnet,
daß der zweite Lagerträger (11) einen Momentenabstützhebel (16) aufweist der vom Rahmen (18) zur Bildung einer Lücke wegbewegbar ist.

10. Nabe nach einem der Ansprüche 1 bis 9,
dadurch gekennzeichnet,
daß der zweite Lagerträger (11) zur Bildung der Lücke mit dem Momentenabstützhebel (12) lösbar verbunden ist.

11. Nabe nach einem der Ansprüche 1 bis 9,
dadurch gekennzeichnet,
daß der Momentenabstützhebel (12) mit dem Distanzteil (15) verbunden ist.

12. Nabe nach einem der Ansprüche 1 bis 11,
dadurch gekennzeichnet,
daß der zweite Lagerträger (11) gegenüber der Achse (1) drehbar in der Nabe angeordnet ist.
